# EUROPEAN PATENT SPECIFICATION

(11) **EP 0 235 478 B1**
(45) Date of publication and mention of the grant of the patent: **24.11.1993**
(21) Application number: 86402878.2
(22) Date of filing: 19.12.1986
(51) Int. Cl.: G01N 17/00, E21B 47/09, G01V 3/18

(54) **Borehole casing diagnostic apparatus**
Prüfvorrichtung für Bohrlochverrohrungen
Appareil de diagnostic de tubes de trous de forage

(30) Priority: 30.12.1985 JP 299777/85
(43) Date of publication of application: 09.09.1987
(73) Proprietor: SCHLUMBERGER LIMITED, New York, N.Y. 10172 (US); SOCIETE DE PROSPECTION ELECTRIQUE SCHLUMBERGER, F-75340 Paris Cédex 07 (FR)
(72) Inventor: Takeda, Jiro, Midori-ku Yokohama-shi Kanagawa-ken 227 (JP); Davies, Dylan Harold, Shinagawa-ku Tokyo (JP)
(74) Representative: Hagel, Francis

(56) References cited:
- US-A- 3 167 707
- US-A- 3 207 981
- US-A- 3 568 053
- US-A- 3 685 158
- US-A- 4 431 964
- PATENT ABSTRACTS OF JAPAN, vol. 9, no. 217 (P-385)[1940], 4th September 1985;& JP-A-60 76 660

## Description

### Technical Field

The present invention generally relates to an apparatus for diagnosing the condition of an elongated casing, and, in particular, to a diagnostic apparatus for diagnosing and examining the electrical condition of an elongated casing, such as a metal pipe. More specifically, the present invention relates to a borehole casing diagnostic apparatus which may be fitted into a long borehole casing fitted into a borehole extending in the earth so as to evaluate cathodic protection and to give a corrosion rate measurement of the casing.

### Prior Art

When a metal pipe or casing is fitted into a borehole, the metal will be liable to corrode as the fluids present in the borehole are potentially corrosive. Since the earth includes several different formations, large scale electrochemical cells can be set up between different parts of the casing, so that in some regions, net current enters the casing from the formation while in other regions net current leaves the casing and flows into the formation. If that is the case, where metal ions leave the casing, the casing will become corroded gradually. It is said that the rate of such corrosion can be in the order of mm/year, which is proportional to the outgoing current in terms of microamps/cm². Since this electrochemical corrosion results from the current leaving the casing, it can be prevented if the casing is maintained at a potential such that net current enters the casing over its entire length. For this purpose, cathodic protection is often used. Cathodic protection is well known in the art, and this is the technique to protect a metal from electrochemical corrosion by making the cathode of an electrochemical cell. Cathodic protection has been and is being used for metal casings fitted into boreholes extending in the earth.

In order to determine whether such cathodic protection is needed or to evaluate and/or optimize the cathodic protection applied for a particular casing, the casing potential profile along the longitudinal direction of the casing is measured. In such a case, typically, a downhole apparatus provided with a plurality of electrodes is fitted into the casing as suspended by a long cable, which is connected to a measurement unit located at the ground surface, and measurements are taken by the measurement unit at the ground surface by traversing the downhole apparatus along the casing. In this case, since the information of a potential difference between any two of the electrodes in contact with the casing must be transmitted to the measurement unit at the ground surface through the long cable connecting the downhole apparatus to the measurement unit, the information tends to be degraded by various reasons, such as noise pick-up and crosstalk. In addition, the information is also adversely affected by thermal EMFs along the long cable and at connections in the downhole apparatus and at surface. In order to eliminate the effects of the cable as much as possible, in particular the thermal EMF effects, it has been proposed to incorporate a relay switch in the downhole apparatus for subtracting the effects of the cable as described in the Japanese Patent Application, No. 60-244217, filed November 1, 1985, which is incorporated herein by reference. It is true that the proposed technique allows to significantly improve the quality of data collected, but it still necessitates to carry out measurement through the long cable since the measurement unit is located at the ground surface. As long as measurements are to be carried out at the ground surface, measurement times will be long due to the need to average or integrate data because of crosstalk and noise problems which occur with remote measurements through the long cable.

As set forth above, in order to carry out potential difference measurements along the longitudinal axis of a casing, the downhole apparatus is typically provided with a plurality of electrodes arranged along the longitudinal axis of the downhole apparatus as spaced apart from each other. Accordingly, it is typically assumed that there is no appreciable potential difference or current in the circumferential direction or it is simply neglected. It is true that U.S.P. 3,207,981 issued to Marsh et al. on September 21, 1965 discloses a downhole apparatus including a plurality of electrodes which are disposed circumferentially. However, this patent only teaches to dispose the plurality of electrodes at the same and single circumference, it neglects the potential difference or current components in the longitudinal direction. Explained more in detail, this patent is concerned with pipe thickness and identifying regions of metal loss, and it only measures potential differences when currents are injected from other electrodes to give a circumferential resistance measurement or comparison of two resistance measurements. It does not measure potential difference as a property in its own right, or for the purposes of measuring natural or externally impressed current.

Thus, none of the prior art techniques cannot sufficiently guarantee the reliability of electrical property data taken since they only allow to make measurements either in the longitudinal direction alone or in the circumferential direction alone, though the potential difference or current may have components both in the longitudinal and circumferential directions.

### Object

It is therefore a primary object of the present invention to obviate the disadvantages of the prior art as described above and to provide an improved apparatus for diagnosing a casing, such as a borehole casing.

Another object of the present invention is to provide an improved casing diagnostic apparatus which may be fitted into a casing, such as a borehole casing, and which includes a measurement unit as disposed therein thereby allowing to carry out downhole measurements locally and directly.

A further object of the present invention is to provide an improved casing diagnostic apparatus capable of carrying out measurements of predetermined electrical property of the casing, in which the apparatus is fitted, not only in the longitudinal direction of the casing but also in the circumferential direction thereof.

A still further object of the present invention is to provide an improved casing diagnostic downhole apparatus capable of determining the local corrosion rate at high accuracy as well as at high speed.

A still further object of the present invention is to provide an improved casing diagnostic downhole apparatus capable of carrying out measurements as submerged in well liquids which are relatively high in electrical conductivity, such as brine.

In accordance with the present invention, there is provided a casing diagnostic downhole apparatus as set forth in claim 1.

In this manner, in accordance with the present invention, since measurements of a desired local electrical property between two points on the casing are carried out directly and locally and the measured data are transmitted to the surface processing unit through the long cable in the form of digital data, the problem of crosstalk is completely eliminated while taking measurements. Since the long cable is used as a data transmission line rather than interconnection lines for a measurement unit, measurements are not adversely affected even if thermal EMFs along the cable are drifting quickly or fluctuating. Furthermore, they are not adversely affected even if potential differences along the cable are large compared with the signal to be measured, i.e., the potential difference between selected two points on the casing. Data transmission between the downhole apparatus and the surface processing unit is carried out digitally, and noise immunity is enhanced significantly. As set forth above, since crosstalk is no longer a problem in the present invention, measurements can be taken in parallel in the case when two or more pairs of electrodes are provided. In accordance with the present invention, as cable noise and drift is not a problem, individual measurements can be taken in shorter time with less averaging or integration steps. This is particularly true for the casing resistance measurement step where crosstalk problems are severe.

In the preferred embodiment of the present invention, the amplifier circuit of the measurement unit provided in the downhole apparatus has a two-stage structure, each stage including a reset stabilized operational amplifier which includes a main d.c. amplifier and a negative feedback loop for cancelling large amplifier offset voltages of the main d.c. amplifier automatically. The feedback loop includes sampling means for sampling an offset voltage of the main d.c. amplifier and holding means for temporarily holding the offset voltage thus sampled, which is then supplied as an input to the main d.c. amplifier for subtraction. Preferably, the holding means includes a capacitor connected between the feedback loop and a reference potential, normally ground, and the sampling means includes a switch and an a.c. offset amplifier connected in series in the feedback loop between the output of the main d.c. amplifier and the holding capacitor. The a.c. offset amplifier includes two capacitors connected in series with a d.c. amplifier. Preferably, the measurement unit also includes at least one current source for supplying a predetermined current between selected electrodes thereby allowing contact resistance between the electrodes and the casing to be measured. The information of contact resistance may be advantageously used as quality control for data taken.

Preferably, the plurality of electrodes are arranged at different axial levels and different circumferential positions in one axial level. Such an axially and circumferentially arranged multi-electrode system allows data of high reliability and high accuracy to be recorded.

It is to be noted that the provision of a plurality of electrodes at one depth, i.e., at the same axial position along the downhole apparatus allows circumferential potential difference measurements to be made. Such circumferential measurements will show the flow of current around the casing, thereby indicating localized corrosion. If coupled with circumferential resistance measurements, which can be effected when four or more electrodes are arranged at the same axial position, these currents may be calculated. This is useful information in its own right, i.e., localising and quantifying corrosion as accurately as possible, and is useful as a quality control for the corrosion rates derived from axial measurements.

Preferably each of the plurality of electrodes is enclosed in an electrically insulating material excepting a predetermined section which comes into contact with the casing when the electrodes are moved to its advanced position. Such an enclosed structure allows to use the present apparatus when it is submerged in any kind of fluid, electrically conductive or non-conductive. The casing is often filled with a relatively electrically conductive fluid, such as brine. Even in this case, the present apparatus having electrodes with enclosed structure can be advantageously used without any problem. The electrically insulating material may be provided in the form of a coating or molding on each of the electrodes. Alternatively or additionally, the insulating material may be formed in the form of a separate packer having a slit, which covers the corresponding electrode.

### Brief Description of the Drawings

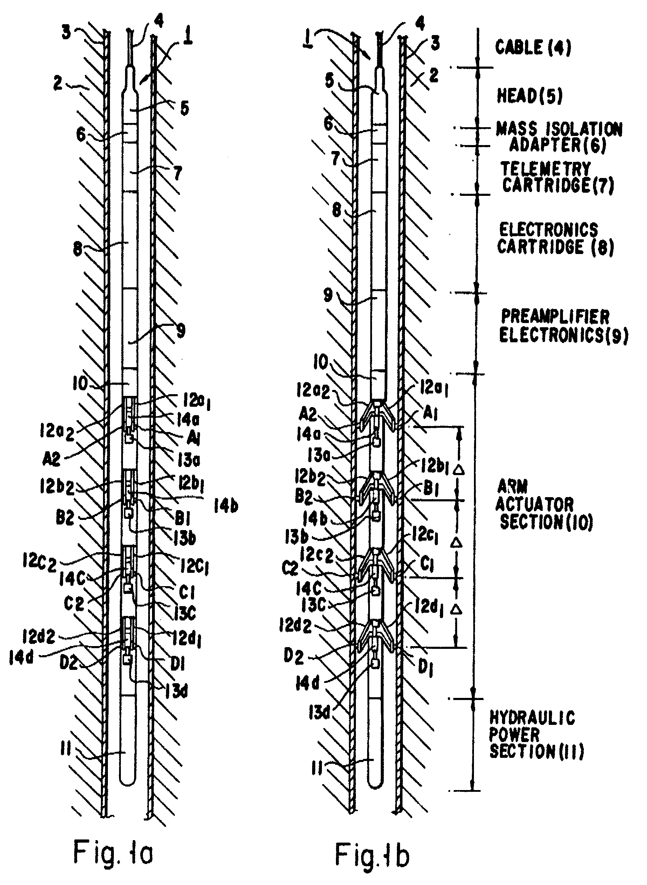

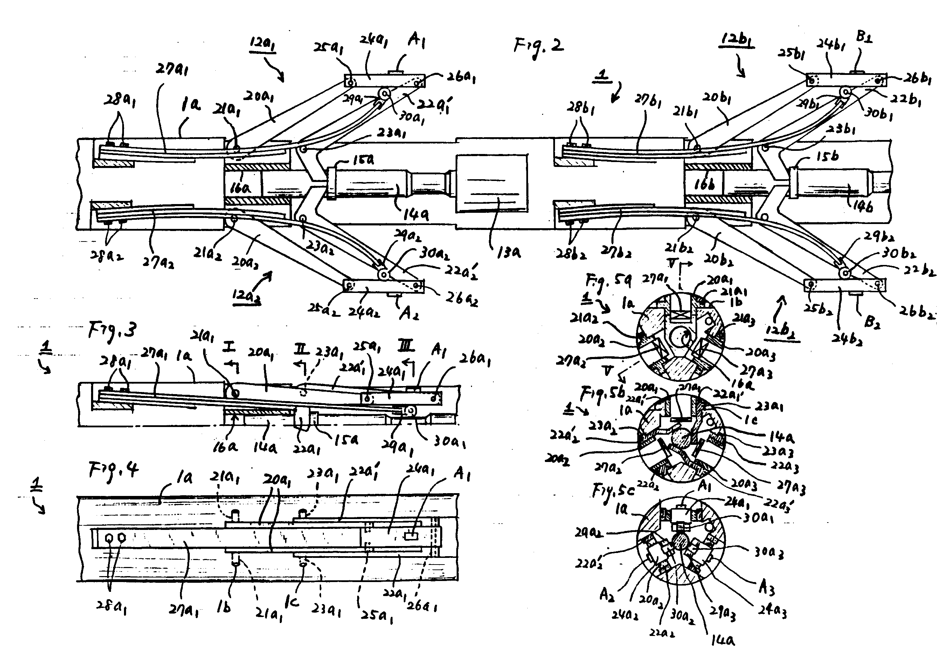

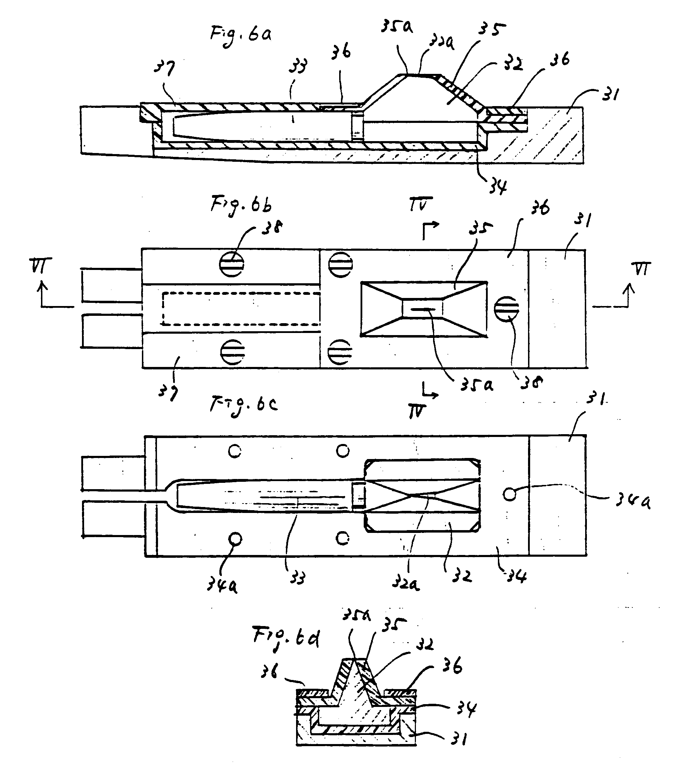

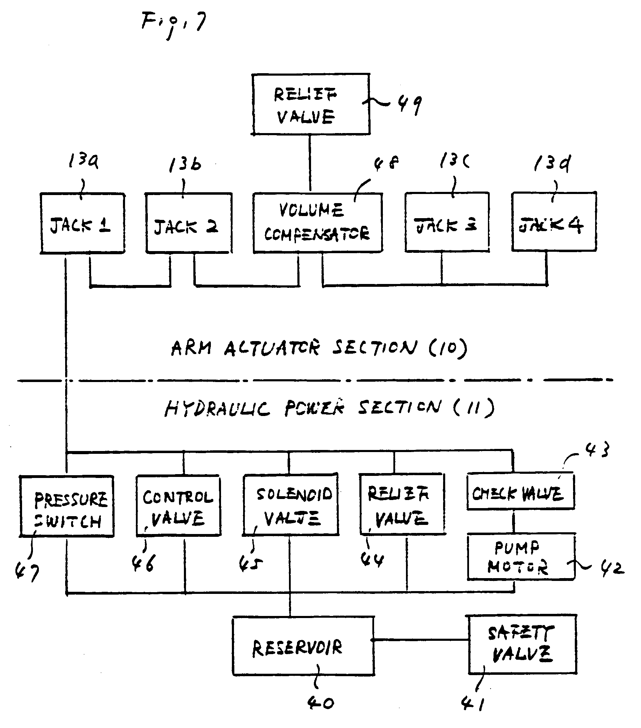

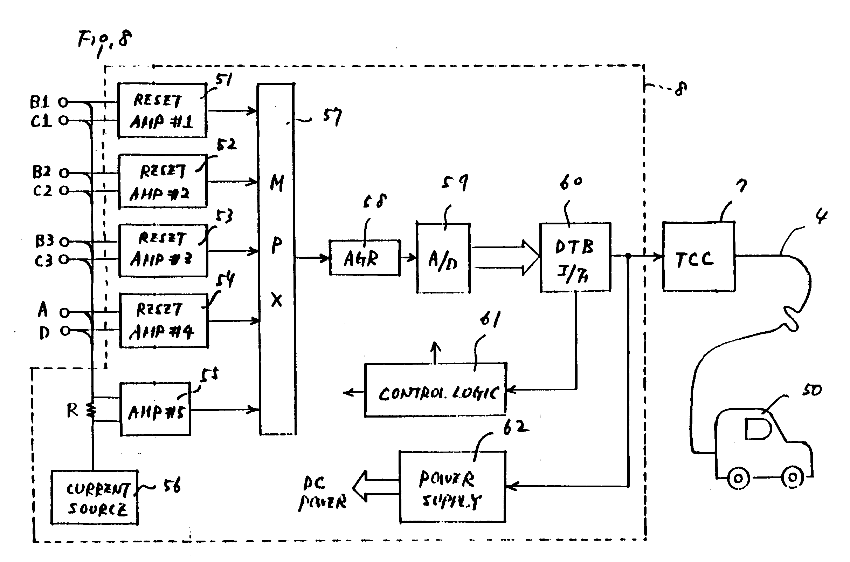

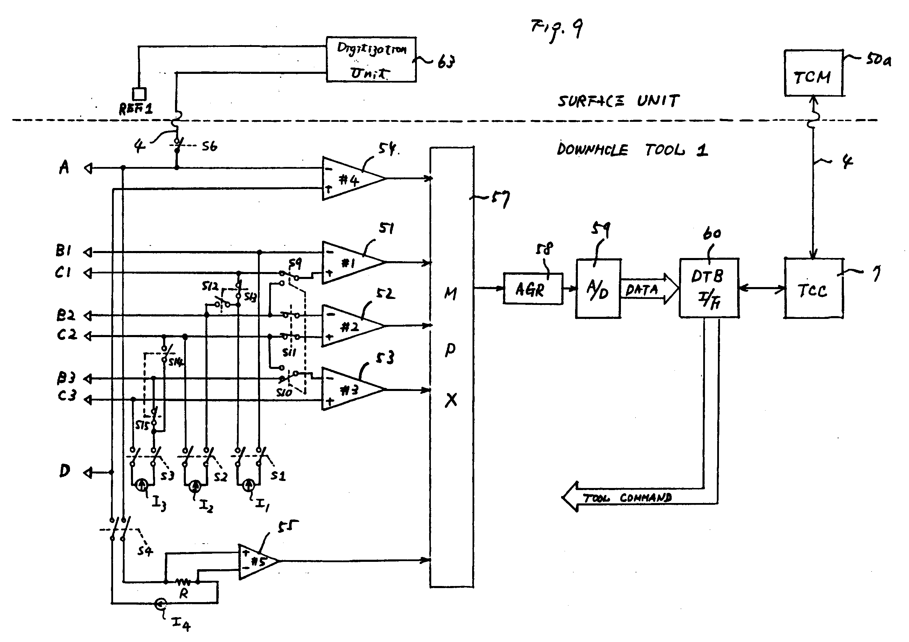

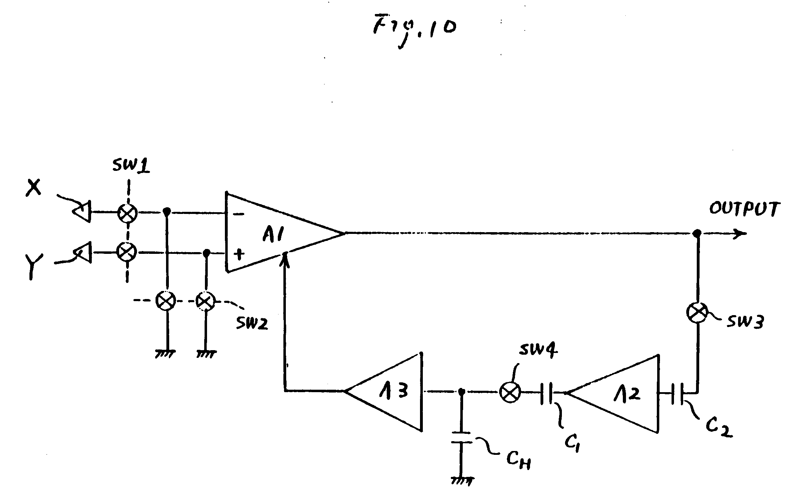

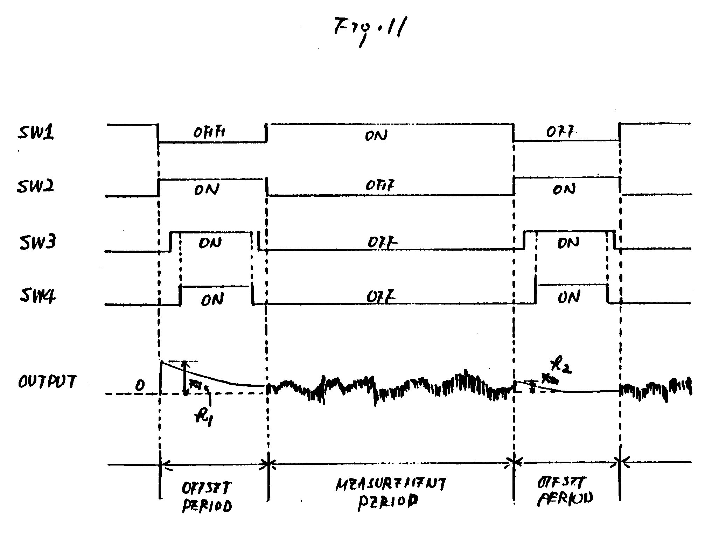

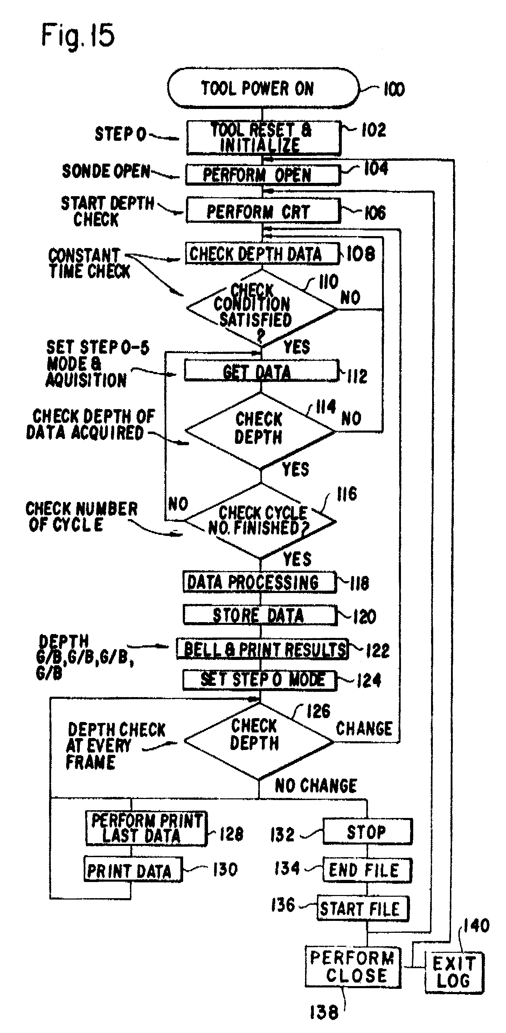

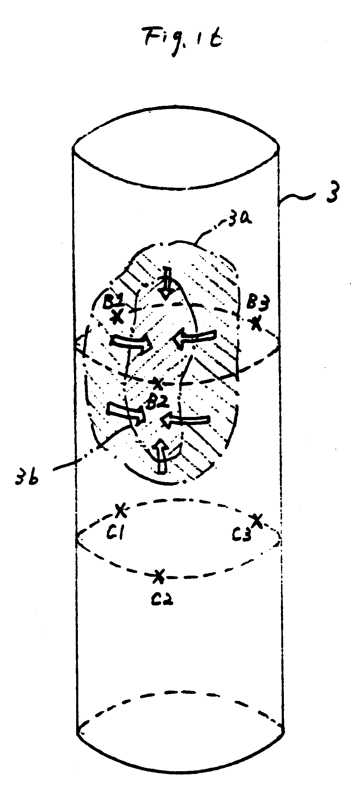

Fig. 1a is a schematic illustration showing a casing diagnostic downhole apparatus 1 constructed in accordance with one embodiment of the present invention when applied to diagnosis of borehole casing wherein the arm assemblies 12 of the downhole apparatus 1 are set in the retracted position; Fig. 1b is a schematic illustration showing the downhole apparatus 1 with the arm assemblies 12 in the advanced position so as to keep the electrodes A through D in contact with the casing 3; Fig. 2 is a schematic illustration, on an enlarged scale and generally taken along the line V-V indicated in Fig. 5a, showing the detailed structure of the arm actuator section 10 of the downhole apparatus 1 with the arm assemblies in the advanced position; Fig. 3 is a schematic illustration showing part of the arm actuator section 10 of the downhole apparatus 1 with the arm assembly 12 in the retracted position; Fig. 4 is a schematic illustration showing the arm assembly 12 in plan view; Figs. 5a through 5c are schematic, cross sectional views taken along lines I, II and III indicated in Fig. 3; Figs. 6a through 6d are schematic illustrations showing an electrode assembly which may be advantageously applied to the present downhole apparatus 1; Fig. 7 is a block diagram showing the hydraulic connection between various elements in the arm actuator and hydraulic power sections 10 and 11 of the downhole apparatus 1; Fig. 8 is a block diagram showing the overall electrical structure of the present downhole apparatus 1; Fig. 9 is a circuit diagram partly in blocks showing the electrical structure of the present downhole apparatus 1 more in detail; Fig. 10 is a circuit diagram showing the reset stabilized offset operational amplifier which is advantageously applied to the electrical structure of the present downhole apparatus 1; Fig. 11 is a timing chart which is useful for explaining the operation of the reset stabilized operational amplifier shown in Fig. 10; Figs. 12, 13 and 14a through 14e are schematic illustrations which are useful for explaining the six step measurement cycle carried out by the present downhole apparatus 1; Fig. 15 is a flow chart showing the overall sequence of operation which may be carried out by the present downhole apparatus 1; and Fig. 16 is a schematic illustration showing how the two dimensional survey for determination of the position of localized corrosion can be carried out by the multi-electrode scheme of the present downhole apparatus.

Now, with reference to the attached drawings, the present invention will be described more in detail by way of embodiments.

Referring now to Figs. 1a and 1b, there is schematically shown a casing diagnostic downhole apparatus 1 constructed in accordance with one embodiment of the present invention. As shown, a borehole casing 3 extends into the earth 2, and the downhole apparatus 1 having a generally torpedo shape is fitted into the casing 3 as suspended by a cable 4. It is to be understood that the cable 4 is a composite cable including a plurality of conductors, each of which is clad with an insulating material, and a high strength wire. Although not shown, the cable 4 extends upward and it is connected to a surface processing unit (not shown) located at the ground surface. As indicated to the right in Fig. 1b, the downhole apparatus 1 includes a plurality of sections along its longitudinal axis. That is, the downhole apparatus 1 includes a head 5 at its top, to which the cable 4 is mechanically coupled, and a mass isolation adapter 6 which electrically isolates the downhole apparatus 1 from the cable 4 thereby preventing any possible galvanic coupling between the downhole apparatus 1 and the cable 4 or the downhole apparatus 1 and the casing 3 if the cable 4 touches the casing 3.

The downhole apparatus 1 also includes a telemetry communication cartridge 7 next to the mass isolation adapter 6. The telemetry communication cartridge 7 is electrically connected to the surface unit (not shown) at the ground surface through the cable so as to carry out communication between the downhole apparatus 1 and the surface unit. The downhole apparatus 1 also includes an electronics cartridge 8 and a preamplifier electronics module 9, which include various electronics and electrical elements to define a measurement unit which directly measures desired electrical properties as will be described more in detail later. It will be sufficient to note in passing that measured analog data are processed and coverted into digital data which are then transmitted upward to the surface unit (not shown) from the telemetry communication cartridge 7 through the cable 4.

Also provided in the downhole apparatus 1 is an arm actuator section 10 which includes four identical arm assemblies 12a, 12b, 12c and 12d disposed at four different axial locations as equally spaced apart from each other over a distance L. Since these arm assemblies 12a, 12b, 12c and 12d are identical in structure, a description will be made only with respect to the top arm assembly 12a with assignment of identical numerals with different small English letters indicating different levels. In the preferred embodiment, the distance L is set approximately at 2 feet (0.6 meters), though the present invention should not be limited only to this particular distance. It is to be noted that, in the illustrated embodiment, each arm assembly, for example 12a, includes three arm sub-assemblies 12a₁, 12a₂ and 12a₃ which are arranged in the circumferential direction at the same axial position and which may pivot radially between a retracted position where the arm sub-assemblies, e.g., 12a₁, 12a₂ and 12a₃ are fit into respective recesses defined in the housing of the downhole apparatus 1 as shown in Fig. 1a and an advanced position where the arm sub-assemblies, e.g., 12a₁, 12a₂ and 12a₃, are located radially outwardly so as to bring corresponding electrodes A1, A2, A3 carried thereon into contact with the internal peripheral surface of the casing 3 under pressure as shown in Fig. 1b. Thus, Fig. 1a shows a closed condition with all of the electrodes A through D located closer to the downhole apparatus 1 at the retracted position as contained in respective recesses defined therein thereby allowing the downhole apparatus 1 to be moved along the casing 3 vertically; on the other hand, Fig. 1b shows an open condition in which all of the electrodes A through D are moved radially outwardly to the advanced position so as to be pressed against the internal peripheral surface of the casing 3. Although not shown in Figs. 1a and 1b for the simplicity of the drawings, it is to be noted that, in the preferred embodiment of the present invention, each of the arm assemblies 12a, 12b, 12c and 12d includes spring means which normally biases the associated arm assembly so as to provide an inclination to take the advanced position as will be described later. It should further be noted that even if the downhole apparatus 1 is set in the open state as shown in Fig. 1b, the downhole apparatus 1 may be moved vertically along the casing 3 with the electrodes A through D sliding along the inner surface of the casing 3, if desired.

The arm actuator section 10 also includes four driver shafts 14a, 14b, 14c and 14d which are operatively coupled to hydraulic jacks 13a, 13b, 13c and 13d, respectively. As will be described more in detail later, these hydraulic jacks 13a through 13d are hydraulically connected to a hydraulic control unit, including a motor, a pump, etc., disposed inside of a hydraulic power section 11 provided at the bottom of the downhole apparatus 1 through a hydraulic line which runs along the arm actuator section 10 from the hydraulic power section 11. It is to be noted that the hydraulic power section 11 is also operatively connected to the electronics cartridge 8 so that the activation and deactivation of the hydraulic power is controlled in accordance with a control signal supplied from the surface unit at the ground surface through the cable 4. It should thus be understood that in the case where the arm assemblies 12a through 12d are normally spring-biased toward the open position, when the hydraulic power section 11 is deactivated, the arm assemblies 12a through 12d will be moved radially outward to take the open position as shown in Fig. 1b; whereas, when the hydraulic power section 11 is activated, the arm assemblies 12a through 12d will be moved radially inward to take the retracted position as shown in Fig. 1a.

Now, with reference to Figs. 2 through 4 and 5a through 5c, the structure of the arm assemblies 12a through 12d, in particular 12a, will be described in detail below. As may be best seen in Figs. 5a through 5c, it is to be noted that the arm assembly 12a includes three identical arm sub-assemblies 12a₁, 12a₂ and 12a₃ which are arranged in the circumferential direction at equal angular intervals, i.e., 120°, around the longitudinal centerline of the downhole apparatus 1. Since the arm sub-assemblies 12a₁, 12a₂ and 12a₃ are identical in structure, only the arm sub-assembly 12a₁ will be described in detail below. The corresponding elements of the other two arm sub-assemblies 12a₂ and 12a₃ are indicated by subscripts "2" and "3", respectively. The arm sub-assembly 12a₁ includes a pair of longer follower arms 20a₁, 20a₁, which are pivoted to a housing or body 1a of the downhole apparatus 1 at pivots 21a₁, 21a₁, respectively, a short follower arm 22a₁ and a short driver arm 22a₁ʹ, which are pivoted to the housing 1a at pivots 23a₁, 23a₁, respectively, and an electrode support plate 24a₁ which is pivotally connected to the forward ends of the follower and driver arms 20a₁, 22a₁ and 22a₁ʹ at pivots 25a₁, 26a₁ and 26a₁, respectively. Since the pivots 21a₁, 23a₁, 25a₁ and 26a₁ together define a parallelogram, the electrode support plate 24a₁ is so supported to be always in parallel with the longitudinal axis of the downhole apparatus 1 even if the follower and drive arms 20a₁, 22a₁ and 22a₁ʹ pivot around the pivots 21a₁ and 23a₁ in unison. As will be described more in detail later, the electrode support plate 24a₁ supports the corresponding electrode A1 so as to project radially outwardly, and, thus, the top surface of the electrode A1 supported by the support plate 24a₁ comes into contact with the internal peripheral surface of the casing 3 when the arm assembly 12a is set in its advanced position.

It should also be noted that the follower arms 20a₁ and 22a₁ are simply elongated in shape, but the driver arm 22a₁ʹ is generally L-shaped and it is pivoted to the body 1a of the downhole apparatus 1 its angled section. As described above, the forward end of the L-shaped driver arm 22a₁ʹ is pivotally connected to the electrode support plate 24a₁, but the other forward end is in engagement with a circular projection 15a which is integrally formed on the driver shaft 14a. As described before, the hydraulic jack 13a is fixedly mounted on the housing 1a which partly receives therein the driver shaft 14a whose forward end is slidably received in a guide hole 16a which is defined in the housing 1a. Thus, when a hydraulic pressure is applied to the jack 13a, the driver shaft 14a projects outward so that the driver arm 22a₁ʹ is forced to pivot clockwise around the pivots 23a₁ in Fig. 2 thereby bringing the arm sub-assembly 12a₁ and thus the electrode A1 into its retracted position shown in Fig. 3. On the other hand, the arm sub-assembly 12a₁ also includes a composite leaf spring 27a₁ whose base end is fixedly attached to the housing 1a by means of fixing means 28a₁ and whose forward end is pivotally connected to the electrode support plate 24a₁ through a connector 29a₁, to which a roller 30a₁ is rotatably mounted. And, thus, the arm sub-assembly 12a₁ is normally biased to move toward its advanced position as shown in Fig. 2 under the force of the spring 27a₁. Accordingly, when the hydraulic pressure applied to the jack 13a is released, the arm sub-assembly 12a₁ is forced to move radially outward to take its advanced position shown in Fig. 2. Thus, as understood, Fig. 1b shows the condition in which all of the arm assemblies 12a through 12d are forced to move radially outward under spring force so that the electrodes A through D are all pressed against the internal peripheral surface of the casing 3.

In the illustrated embodiment, the housing 1a of the downhole apparatus 1 is provided with three recesses arranged in the circumferential direction at equal angular intervals corresponding in position to the associated arm sub-assemblies, e.g., 12a₁, 12a₂ and 12a₃, so that these arm sub-assemblies may be received in the respective recesses when set in the retracted position as shown in Figs. 3 and 4. When the arm sub-assemblies are all set in the retracted position, all of the electrodes A through D are located radially inward with respect to the outermost peripheral point of the housing 1a so that the electrodes A through D are prevented from coming into engagement with undesired objects unintentionally. It should also be noted that the long arms 20a₁ are located inward of the short arms 22a₁ so that they are prevented from interfering pivotal motion from each other. As shown in Figs. 4 and 5a through 5c, the housing 1a is formed with a pair of holes 1b, 1b, in which the pivots 21a₁, 21a₁ are fitted, and a pair of holes 1c, 1c, in which the pivots 23a₁, 23a₁ are fitted.

Fig. 7 shows in block diagram the hydraulic connection between the arm actuator section 10 and the hydraulic power section 11. As shown, the hydraulic power section 11 includes a reservoir 40 for storing there a quantity of working fluid, such as oil, and a safety valve 41 connected to the reservoir 40. Also provided in the hdyraulic power section 11 as being in fluidic communication with the reservoir 40 are a pump motor 42, a relief valve 44, a solenoid valve 45, a control valve 46 and a pressure switch 47. A check valve 43 is also provided as connected to the outlet of the pump motor 12. Thus, when the pump motor 42 is activated, the oil in the reservoir 40 is supplied under pressure to each of the jacks 13a through 13d in the arm actuator section 10, and, thus, the arm assemblies 12a through 12d are set in the closed condition as described before. On the other hand, after stopping the pump motor 42, when the solenoid valve 45 is opened, i.e., deactivating the hydraulic power section 11, the oil is returned to the reservoir 40 from the arm actuator section 10 under the recovery force of the springs 27. It should be noted, however, that, in the illustrated embodiment, the operation of the arm assemblies 12a through 12d has been carried out hydraurically; however, it can also be done mechanically, electrically or magnetically as is obvious for one skilled in the art.

Figs. 6a through 6d show an electrode assembly which can be advantageously applied to the above-described downhole apparatus 1. As shown, the electrode assembly has an enclosed structure and it includes a base 31, for example, of steel generally in the shape of a plate with its top central portion recessed. A bottom insulator 34 of, preferably, PEEK (Poly-Ether-Ether-Ketone) is placed on the top surface of the base 31, and then an ax-shaped electrode 32 having a triangular top surface 32a sits on the bottom insulator 34 so that the electrode 35 is electrically isolated from the steel base 31. It is to be noted that the electrode 35 corresponds to any one of the electrodes A through D shown in other drawings. In the preferred embodiment, the electrode 35 is coated with an electrically insulating material, preferably Viton. The electrode 32 is integrally provided with a socket connector on which a rubber boot 33 is fitted. Thus, the electrode 32 is electrically connected to the electrical circuit formed in the electronics cartridge and preamplifier electronics sections 8 and 9 through the socket connector and interconnection lines (not shown). Also provided is a packer 35 of, preferably, Viton, which encloses the ax-shaped electrode 32. The packer 35 has a truncated pyramid shape and it is formed with a slit 35a at its top flat surface, so that the apex surface 32a of the ax-shaped electrode 32 can come into contact with the internal peripheral surface of the casing 3 through the slit 35a when the electrode 32 is located at its advanced position to be pressed against the casing 3.

A pair of covers 37 and 36 of, preferably, PEEK, are placed on the connector and electrode sections, respectively, as shown, and these covers 37 and 36 are fixedly attached to the base 31 by means of screws 38 which are screwed into threaded holes (not shown) formed in the base 31 through the holes 34a formed in the bottom insulator 34. It should thus be clear that the electrode 32 is enclosed by an electrically insulating material excepting a predetermined section, i.e., apex surface 32a in the illustrated embodiment, which may be exposed through the slit 35a when the electrode 32 is pressed against the casing 3. In the above-described embodiment, the electrode 32 is coated with an insulating material and enclosed in the packer 35. It is to be noted, however, that the packer 35 may be molded on the electrode 35 with or without coating. Alternatively, the electrode 35 may be simply placed in the packer 35 without coating, if desired. When the electrode 32 is coated, its apex surface 32a may also be coated because the coating on the apex surface 32a may be removed when the electrode 32 is first pressed against the casing 3. However, it is true that it is preferable to provide no coating on the apex surface 32a.

Now, turning to Fig. 8, the electrical structure of the casing diagnostic downhole apparatus 1 will be described. In Fig. 8, there are shown 8 electrodes A, B1-B3, C1-C3 and D. As is understood, A refers to the topmost stage, B to the second highest stage, C to the third highest stage and D to the bottom stage. As described above, the present embodiment includes three electrodes circumferentially arranged at each stage, i.e., A1-A3, B1-B3, C1-C3 and D1-D3. However, in the present embodiment, the three electrodes of each of the top and bottom stages, i.e., A1-A3 and D1-D3, are all shorted together. Thus, only one electrode A and D is shown for the top and bottom stage in Fig. 8. The electrical structure shown in Fig. 8 includes four identical amplifier circuits 51, 52, 53 and 54 whose two input terminals are connected to paired electrodes B1-C1, B2-C2, B3-C3, and A-D, respectively. As will be made clear later, each of the identical amplifier circuits 51 through 54 has a two-stage structure comprised of a preamplifier and main amplifier which are basically the same in structure and include a reset stabilized operational amplifier, which will be described in detail later. The preamplifier section, which is the first half of each of the amplifier circuits 51 through 54, is positioned in the preamplifier electronics section 9 and the other half is positioned in the electronics cartridge section 8. Since each of the amplifier circuits 51 through 54 is connected to a corresponding pair of electrodes, potential difference, present across the corresponding pair of electrodes when pressed against the casing 3 can be directly measured by the amplifier circuits 51 through 54.

All of the four amplifier circuits 51 through 54 have their output terminals connected to a multiplexer 57. Also provided in the electronics cartridge section 8 is another amplifier circuit 55 which is of conventional design since high accuracy is not necessary for this amplifier. The amplifier circuit 55 has two input terminals, across which is provided a resistor R, and an output terminal which is connected to the multiplexer 57. A current source 56 is provided and is connected to one end of the resistor R and this supplies known currents to selected pairs of electrodes when contact resistance between the electrodes and the casing 3 or casing resistance is to be measured. The multiplexer 57 has its output terminal connected to an analog-to-digital (A/D) converter 59 through an auto-gain ranger 58, which allows signals of very different levels due to the different measuring modes in each of the steps of the measurement cycle to be digitized by the same circuitry for a given gain depending on the signal level. The A/D converter 59 is connected through a bus to a downhole tool bus interface (DTB I/F) 60 which is also connected to a control logic 61. Furthermore, the DTB I/F 60 is connected to a telemetry communication cartridge 7 which is also connected to a power supply 62 in the electronics cartridge section 8 and to a surface processing unit 50, typically including a computer, at the ground surface through the cable 4.

With this electrical structure, the computer in the surface unit 50 sends commands to the control logic 61 in the electronics cartridge section 8 through the cable 4 and telemetry system, which then supplies various control signals to various elements in the electronics cartridge section 8 to control the various steps in a measurement cycle. The power required to operate various electronics elements is also supplied from the surface unit 50 through the power supply 62. For example, when a potential difference measurement is to be carried out, the potential difference present across two pairs of electrodes in contact with the casing 3 is directly measured in the form of an analog signal and amplified by the corresponding amplifier circuit 51, 52, 53 or 54, and this signal is converted into digital data, which is then transmitted to the surface unit 50 through the cable 4. In this manner, in accordance with this aspect of the present invention, since a desired electrical property is directly measured locally and digitized before being transmitted to the surface unit 50 through the long cable 4, measurements can be carried out at high S/N ratio and at high accuracy even if the electrical property to be measured is relatively small in magnitude.

It is to be noted that, in the case of diagnosis of a borehole casing, measurements must be taken at high temperatures, e.g., up to about 200 °C, and the temperature varies with depth, so that the offset voltage of any amplifier will be large and will vary greatly over the diagnosis. Thus, it is necessary to cancel the offset. Even if this is done, if the signal is small as compared with the offset, the measurement will be of low accuracy because the dynamic range of the A/D converter 59 is covering the offset and not the signal. As will be made clear later, the provision of a reset stabilized amplifier having a feedback loop enables the signal to be digitized with high accuracy as the signal then covers the dynamic range of the amplifier, thereby allowing the efficient use of the number of bits to be provided by the A/D converter 59. In other words, the offset of an amplifier due to temperature variation can be effectively eliminated by a reset stabilized amplifier structure as will be described below.

Now, referring to Figs. 10 and 11, the structure and operational characteristics of the reset stabilized operational amplifier employed in each of the amplifier circuits 51 through 54 will be described in detail below. Fig. 10 shows a reset stabilized operational amplifier when used as the first stage of each of the two-stage amplifier circuits 51 through 54, and it includes a main d.c. amplifier A1, which has a pair of first input terminals, a second input terminal and an output terminal. The pair of first input terminals of the amplifier A1 is connected to a corresponding pair of electrodes X and Y (in the illustrated example, X-Y corresponds to any pair of B1-C1, B2-C2, B3-C3 and A-D) through a pair of input switches SW1 which are turned on and off together as indicated by the dotted line. The pair of first input terminals of the amplifier A1 is also connected to reference, ususally ground, through another pair of reset switches SW2 which are also operated together. The amplifier A1 supplies its output from its output terminal which is connected to an input terminal (or non-inverting input terminal) of the main d.c. amplifier of the second stage and which is also connected to the second input terminal of the amplifier A1 via a negative feedback loop, as shown in Fig. 10.

The feedback loop includes, as connected in series from the output terminal of the amplifier A1 to the second input terminal of the amplifier A1, a sampling switch SW3 for sampling an offset voltage produced by the main d.c. amplifier A1 at its output terminal, an amplifier A2 for detecting and amplifying the offset voltage sampled by the sampling switch SW3, a holding switch SW4, and a holding amplifier A3. Two capacitors C₁ and C₂ are also provided and are connected in series at the input and output terminals of the amplifier A2, respectively. These capacitors are required in order to eliminate the offset voltage of the amplifier A2. C1, C2 and A2 together constitute an a.c. offset amplifier. In addition, a holding capacitor C_{H} is provided as connected between the input terminal of the holding amplifier A3 and ground. The holding capacitor C_{H} temporarily holds the offset voltage from the main d.c. amplifier A1 after it has been amplified by the a.c. offset amplifier comprised of C1, C2 and A2 for a period between the on and off operation of the holding switch SW4. The offset voltage temporarily stored in the holding capacitor C_{H} is applied to the second input terminal of the main d.c. amplifier A1 through the holding amplifier A3 which serves as a buffer for this voltage. Thus an electrical property measured across the pair of electrodes X and Y along the casing 3 can be amplified by the main d.c. amplifier A1 and supplied as its output without including the amplifier offset voltage because it is effectively cancelled at the amplifier A1.

Now, referring particularly to Fig. 11, it will be described as to how the reset stabilized operational amplifier shown in Fig. 10 operates to measure a desired electrical property present across the pair of electrodes X and Y along the casing 3 without being adversely affected by the offset voltage of the main d.c. amplifier A1. In the timing chart shown in Fig. 11, the reference characters indicated in the left side column correspond to those elements having identical reference characters in the circuit of Fig. 10. Initially, the switches SW1, SW3 and SW4 are all off and the switches SW2 are on, so that the pair of first input terminals of the amplifier A1 is grounded. Under the condition, as shown in Fig. 11, the main d.c. amplifier A1 supplies at its output terminal an offset voltage h₁. Then, when the sampling switch SW3 is turned on, this offset voltage h₁ is sampled and amplified by the amplifier A2, and, shortly thereafter the holding switch SW4 is turned on and the holding capacitor C_{H} is charged by the offset voltage thus amplified. At the same time, this offset voltage is fed back to the second input terminal of the amplifier A1 through the amplifier A3. Since this fed back offset voltage is applied to the second input terminal of the amplifier A1 in a negative sense, the original offset voltage h₁ is reduced. Then, after a predetermined period of time, the holding switch SW4 is turned off, so that the amplifier A3 continues to apply the offset voltage stored in the holding capacitor C_{H} for a time period until the holding switch SW4 is next turned on. In succession, the sampling switch SW3 is turned off. This summarizes the offset period indicated in Fig. 11. Thereafter, the pair of input switches SW1 are turned on and the pair of reset switches SW2 are turned off. Therefore, the amplifier A1 takes in a potential difference present between the pair of electrodes X and Y along the casing 3, which is then amplified and outputted. This corresponds to a measurement period during which measurement of a desired potential difference across the electrodes X and Y along the casing is carried out. Then, the pair of input switches SW1 are again turned off and at the same time the pair of reset switches SW2 are turned on tot ground the pair of first input terminals of the amplifier A1 which thus supplies another offset voltage h₂ at its output terminal. As this sequence of steps is repeated over and over again, the level of the offset voltage output from the amplifier A1 gradually decreases and eventually is reduced to h₁/gain of amplifier A2, which is very small.

Fig. 9 shows the electrical structure of the present downhole apparatus 1, which is basically the same as Fig. 8 but is more detailed particularly with respect to the structure of the current source 56. As shown in Fig. 9, the current source 56 of Fig. 8, in fact, includes four current sources I₁ through I₄. In addition, there exists a plurality of associated switches S1 through S4 and S6 through S15. Moreover, a digitization unit 63 at the ground surface is also shown in Fig. 9 as connected to the downhole apparatus 1 through the cable 4. In the illustrated embodiment, the current sources I₁ through I₃ are identical and they supply a current equal to 1 mA; whereas, the current source I₄ supplies a larger current equal to 0.5 A. The exact value of the currents is not important and could be changed without altering the functioning of the apparatus. What is important is that one is relatively small as compared with the other.

The current source I₁ is so connected that it supplies a small current of 1 mA across the pair of electrodes B1 and C1 along the casing 3 when a pair of switches S1, S1, which are operated together as indicated by the connecting dotted line, is closed and a switch S13 is closed. This corresponds to injection of a small axial current along the casing 3 between the two electrodes B1 and C1 which are arranged in the longitudinal direction. It should be noted that switches S12 and S13 are in operative association as they are connected by the dotted line so that when the switch S13 is closed, the switch S12 is open and when the switch S13 is open, the switch S12 is closed. Thus, if the switch S13 is open and thus the switch S12 is closed when the pair of switches S1, S1 is closed, the current source I₁ supplies a current of 1 mA across the pair of electrodes B1 and B2 along the casing 3. This corresponds to injection of a small current in the circumferential direction on the casing 3 because the electrodes B1 and B2 are located at the same axial position. On the other hand, when a pair of switches S2 is closed with the switch S12 open, the current source I₂ supplies a current of 1 mA across the pair of electrodes B2 and C2 along the casing 3. Further, switches S14 and S15 are operated at the same time such that one of them is open and the other closed, and, thus, if the switch S14 is open and thus the switch S15 is closed when a pair of switches S3, S3 is closed, the current source I₃ supplies its current of 1 mA across the electrodes B3 and C3 along the casing 3 in the longitudinal direction thereof; whereas, if the switch S14 is closed and thus the switch S15 is open when the switches S3, S3 are closed, the current supplied by the current source I₃ flows across the two electrodes C2 and C3 along the casing 3 circumferentially.

The amplifier circuit 51, which contains two stages of a reset stabilized operational amplifier as described above, has its inverting input terminal connected to the electrode B1 at the second highest axial position and its non-inverting input terminal connected to a switch S9. Thus, when the switch S9 is off, it causes the non-inverting input terminal of the amplifier 51 to be connected to the electrode C1 at the third highest axial position; on the other hand, when the switch S9 is on, the non-inverting input terminal of the amplifier 51 is connected to the electrode B2 at the second highest axial position. A switch S10 is operatively associated with the switch S9, and the inverting input terminal of the third amplifier circuit 53 is connected to the electrode B3 when the switch S10 is off and to the electrode C2 when the switch S10 is on while the non-inverting input terminal of the amplifier circuit 53 is always connected to the electrode C3. The second amplifier circuit 52 has its non-inverting and inverting input terminals connected to and disconnected from the respective electrodes B2 and C2 depending on as to whether its pair of switches S11, S11 is on or off, respectively.

The fourth amplifier circuit 54 has its inverting input terminal connected to the electrode A, which is a combination of three electrodes A1-A3 shorted together, and also to the surface digitization unit 63 through a switch S6 and the cable 4. The non-inverting input terminal of the fourth amplifier circuit 54 is connected to the electrode D, which is also a combination of three electrodes D1-D3 shorted together. The current source I₄, which supplies the large current of 0.5 A, is connected in series with the resistor R and it supplies the current of 0.5 A across the top and bottom electrodes A and D along the casing 3 when a pair of switches S4, S4 is closed. As shown in Fig. 9, the surface unit includes a digitising unit 63 which has a pair of input terminals one of which connects to a reference potential source REF1 and the other to S6 via the cable 4. It is to be noted that the surface unit also includes a telemetry communication module 50a which is mounted in the surface unit 50 for communication with the telemetry cartridge 7 of the downhole apparatus 1. It should also be understood that all of the switches S1 through S4, S6 and S9 through S15 are operated by control signals supplied from the control logic 61 to which commands are supplied from the surface unit 50 via the cable 4.

Now, the operation of the casing diagnostic downhole apparatus 1 having the above-described structure will be described with reference to Figs. 12, 13, 14a through 14f and 15. In the illustrated embodiment, potential differences in the axial and circumferential directions between two points on the casing 3, casing resistances in the axial direction between two points on the casing 3 and contact resistances between the electrodes B, C and the casing 3 are measured as selected electrical properties in a six step measurement cycle. The six step cycle includes STEP0 through STEP5 as indicated in Figs. 12 and 13, and, more particularly in Figs. 14a through 14f. On the other hand, Fig. 15 shows the overall sequence of steps in the measurement operation.

The measurement operation is triggered and controlled by the software stored in a computer system (not shown) in the surface unit 50 at the ground surface. When the downhole apparatus 1 is lowered into the casing 3 and it is moving, no data is being recorded and the software is continually checking the depth. When the software sees a constant depth for longer than a predetermined period, it triggers the start of the six step measurement cycle. Once the measurement cycle is complete, the software rings a bell to indicate that the six step measurement cycle is complete and that the downhole apparatus 1 can be moved to another depth. Although not shown specifically, the surface unit 50 also includes a printer which prints out the measured results every time upon completion of the six step measurement cycle, and the printer also prints out a GOOD/BAD electrode contact condition for the contact resistance measurements based on an upper limit which has been selectively determined by the operator prior to the operation. Such an upper limit may be refined based on the data just taken. Accordingly, the operator at the ground surface knows when he can move the downhole apparatus 1 to another depth whenever the bell rings, and the operator has an immediate indication of whether the data is good or bad according to the contact resistance information. Once the software has finished the data acquisition, computation, rung the bell and printed out the results, it again starts to check the depth pulses. Once it sees a change in depth, it then goes to the depth checking routine thereby looking for a cessation of depth pulses, which indicates that the downhole apparatus 1 has been located at another depth.

It is to be noted that there can be some offset or inaccuracy in the data collected from various uncontrollable reasons. Thus, in accordance with the preferred mode of the present invention, the data collected is screened based on the contact resistance data between the electrodes and the casing, and those data, for which the contact resistance data is found to be equal to or smaller than a derived reference value, are extracted as valid data for use in data processing. That is, if a metal casing is corroded, a corroded layer is usually formed on the surface of the casing at least partly. Thus, even if an electrode is pressed against the casing, it may be that the electrode is not brought into electrical contact with the casing per se properly due to the presence of a relatively thick corroded layer. In such a case, the contact resistance between the electrode and the casing is relatively high, so that accurate measurements of desired electrical properties, such as a potential difference between two points on the casing are hindered.

In this connection, it can be shown that there is an upper limit for the contact resistance beyond which a significant potential difference exists across the corroded layer. This limit depends on the kind of fluid inside of the casing. In ths case where the fluid inside of the casing is relatively insulating, such as air, disel oil or the like, the upper limit is a few tens of ohms. When the casing is filled with a fluid which is conductive or polar, such as water, brine or the like, the upper limit for the contact resistance is a few hundreths of an ohm, only. Thus, if the contact resistance is lower than this upper limit, the potential drop across teh contact resistance can be considered to be negligible and thus the potential difference measured across two electrodes pressed against the casing is substantially equal to the real potential difference existing along the casing between the two corresponding points. Therefore, it is important to measure the contact resistance as a quality control of the data taken and to indicate a GOOD/BAD contact condition to the operator. A more detailed explanation in this respect is found in the beofer-mentioned Japanese Patent Application, No. 60-244217.

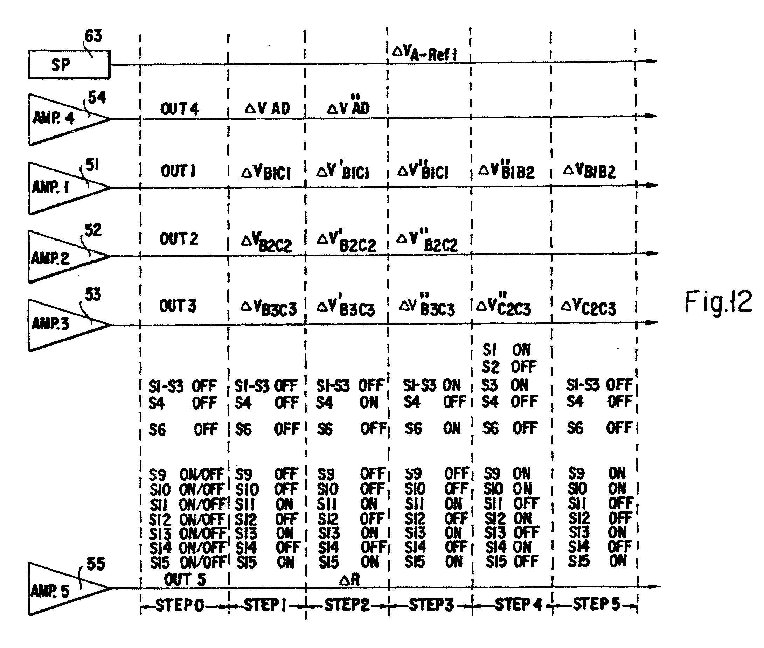

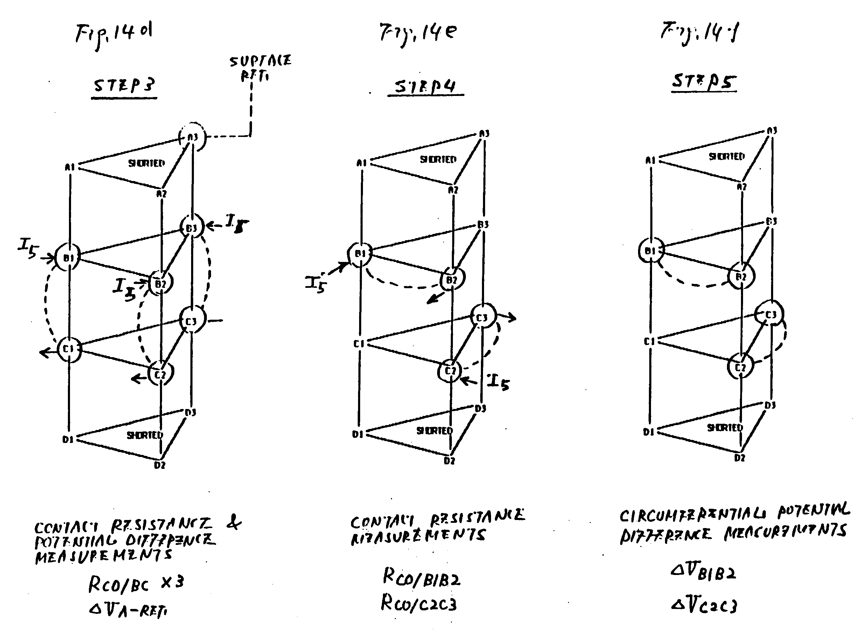

The six step measurement cycle will now be described in detail below with reference to Figs. 12, 13 and 14a through 14f. Figs. 14a through 14f correspond to the respective steps in the six step measurement cycle which includes:
- (1) STEP0:: AMP OFFSET MEASUREMENT
- (2) STEP1:: AXIAL POTENTIAL DIFFERENCE MEASUREMENT
- (3) STEP2:: CASING RESISTANCE MEASUREMENT
- (4) STEP3:: AXIAL CONTACT RESISTANCE MEASUREMENT
- (5) STEP4:: CIRCUMFERENTIAL CONTACT RESISTANCE MEASUREMENT
- (6) STEP5:: CIRCUMFERENTIAL POTENTIAL DIFFERENCE MEASUREMENT.

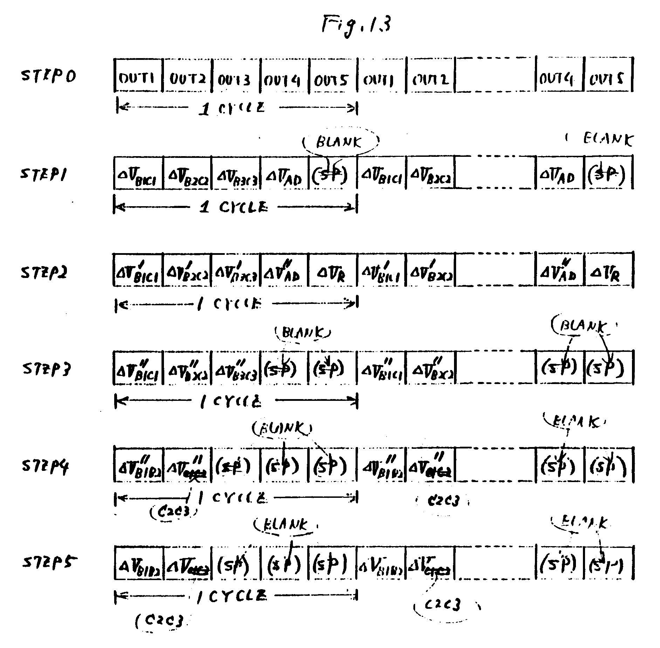

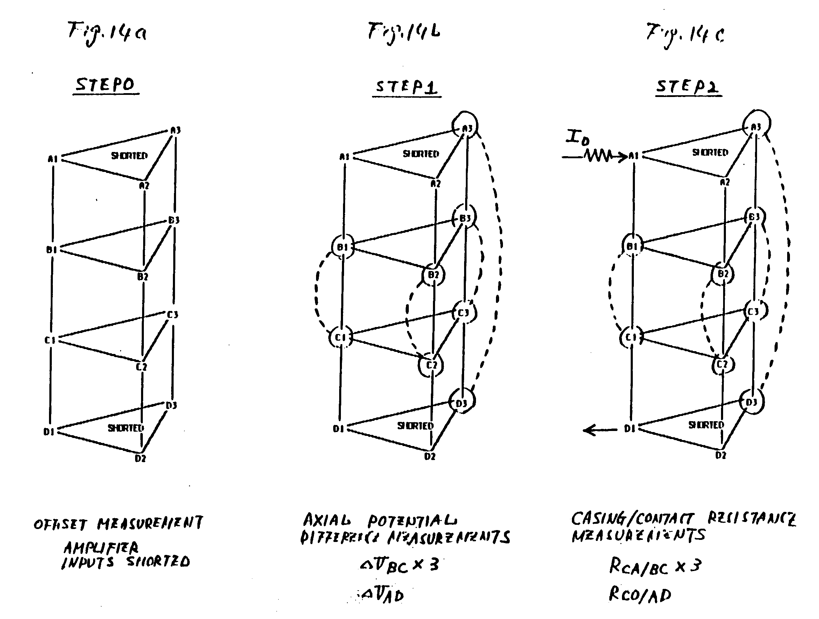

As shown in Fig. 14a, the present downhole apparatus 1 includes three circumferentially arranged electrodes at four different axial levels. But, the electrodes A1-A3 at the top level are always shorted together and the electrodes D1-D3 are always shorted together in the present embodiment, so that there are, in effect, 8 electrodes which are electrically isolated from each other. It is to be noted that the all of the electrodes A-D are in contact with the inner peripheral surface of the casing 3 in Figs. 14a through 14f. In Fig. 12, the ON/OFF condition of each of the switches S1 through S4, S6 and S9 through S15 shown in Fig. 19 in each of the six steps STEP0 through STEP5 is indicated column by column and the electrical properties measured in each step are also indicated in each column. On the other hand, Fig. 13 shows a stream of data supplied from the A/D converter 59 eventually to the surface unit 50 through the cable 4 in each of the six steps STEP0 through STEP5.

At STEP0, the inverting and non-inverting input terminals of each of the five amplifier circuits 51 through 54 are shorted and commonly connected to ground. This corresponds to the case in which the switches SW1, SW1 are turned off and the switches SW2, SW2 are turned on in the circuit of Fig. 10. Thus, the amplifier circuits 51 through 54 supply their offset values OUT1 through OUT5 which are then supplied to the surface unit 50 through the cable 4 after having been digitized by the A/D converter 59.

At STEP1, the switches S1 through S4 and S6 through S15 are set as indicated in the STEP1 column of Fig. 12 so that an electrical connection is established such that the first amplifier circuit 51 measures a potential difference between the electrodes B1 and C1, the second amplifier circuit 52 measures a potential difference between the electrodes B2 and C2, the third amplifier circuit 53 measures a potential difference between the electrodes B3 and C3, and the fourth amplifier circuit 54 measures a potential difference between the electrodes A and D. In Fig. 14b, the two electrodes, across which an axial potential difference is measured, are circled and connected by a dotted curve line. Thus, the four potential difference data are taken, digitized by the A/D converter 59 and transmitted to the surface unit 50 in the form of a data stream shown at STEP1 in Fig. 13.

At STEP2, the switches S4 in Fig. 9 are turned on so that the known current I₀, or 0.5 A in the present embodiment, is applied between the top and bottom electrodes A and D by the current source I₄. In Fig. 14c, the injection of this current I₀ is indicated by the arrow directed to the electrode A1. With this current flowing axially along the casing 3, the potential differences across the three pairs of vertically oriented electrodes B1-C1, B2-C2, and B3-C3 are measured thereby allowing to calculate three casing resistances. In addition, since the known current of 0.5 A is injected across the top and bottom electrodes A and D, the contact resistance between the top and bottom electrodes A and D and the casing 3 can be determined. In Fig. 13, the measured potential differences for use in calculation of casing resistances are indicated by single prime and the measured potential differences for use in calculation of contact resistances are indicated by double prime.

At STEP3, the switches S1, S2 and S3 shown in Fig. 9 are all turned on so that the current sources I₁ through I₃ supply a small known current of 1 mA to the respective pairs of electrodes B1-C1, B2-C2 and B3-C3. The injection of these small currents are indicated by the arrows in Fig. 14d. With the injection of these small currents between the respective pairs of electrodes, the potential differences between the respective pairs of electrodes are measured, which are digitized and supplied to the surface unit 50 where the data is processed to calculate contact resistances. In this step, since the switch S6 is turned on and the potential difference between the electrode A and the surface reference is measured by the surface digitizing unit.

At STEP4, in Fig. 9, the switches S9 and S10 are turned on and the switches S11 are turned off with the switches S1 and S3 turned on so that the first amplifier circuit 51 is connected to measure a potential difference between the two electrodes B1 and B2 in the same and second-level circumference and the third amplifier circuit 53 is connected to measure a potential difference between the two electrodes C2 and C3 at the same and third-level circumference. Thus, as shown in Fig. 14e, the small current of 1 mA is injected to flow along two circumferential paths on the casing 3. With this current injection, the circumferential potential difference is measured between the electrodes B1-B2 and also between C2-C3, and the thus measured results are digitized and transmitted to the surface unit 50, where calculation is carried out to obtain the contact resistances between the electrodes B1-B2 and the casing 3 and between the electrodes C2-C3 and the casing 3. Similarly with the step shown in Fig. 14d, the small current I₅, actually I₁ and I₃ injected at this step shown in Fig. 14e is 1 mA in the present embodiment.

At STEP5, the switches S1 and S3 shown in Fig. 9 are turned off thereby terminating the injection of the small currents, and the first and third amplifier circuits 51 and 53 are connected to measure a potential difference between the electrodes B1 and B2 and between the electrodes C2 and C3, as indicated in Fig. 14f. Thus, the potential difference measurements are carried out between B1 and B2 and between C2 and C3 and the measured results are digitized and transmitted to the surface unit 50 thereby completing the six step measurement cycle.

As described above, in accordance with the present invention, since a plurality of electrodes are arranged at different circumferential positions as well as at different axial positions, two or more axial potential difference measurements can be carried out at different circumferential positions on the casing 3 at the same time and this will provide more detailed information as to the location of corrosion. Besides, the potential difference measurements are carried out axially as well as circumferentially, the position of local corrosion can be determined not only in the axial direction, but also in the circumferential direction. The importance of this aspect of the present invention may be better understood when reference is made to Fig. 16. That is, Fig. 16 shows a section of the casing 3 in which a cathodic area 3a and an anodic area 3b are formed locally. The points of contact by the three second-level electrodes B1-B3 and third-level electrodes C1-C3 are indicated by crosses. It is seen that the electrode B2 is located in the anodic area 3b with the other electrodes being not located in either of the cathodic and anodic areas 3a and 3b. The direction of the localized current flowing in the metal of the casing 3 from the cathodic area 3a to the anodic area 3b is indicated by the white arrows. Thus, net current will leave the casing 3 from the anodic area 3b to the surrounding earth.

Even if there is such a localized corrosion on the casing, the present invention allows to pin-point the location of the corrosion because the axial potential difference between B2-C2 will be different from those between B1-C1 and B3-C3 and the circumferential potential difference between B2-B1 of B2-B3 will be different from any between C2-C1, C2-C3 or C1-C3. Of course, the resolution in the axial and circumferential directions is enhanced as the number of electrodes provided is increased. Besides, if four or more electrodes are disposed axially or circumferentially because such an arrangement will allow to measure a casing resistance between two inner electrodes with the two outer electrodes injecting a known current.

### Effects

As described in detail above, in accordance with the present invention, when the downhole apparatus is so structured to measure a desired electrical property at the site of deployment directly, measurements can be carried out at high accuracy. Since the measurements are carried out locally and the measured results are digitized and transmitted to a desired place through the cable, the measurements are not adversely affected by the cable no matter how long it may be. When the downhole apparatus is structured to have a plurality of electrodes arranged axially as well as circumferentially, a local two dimensional survey of the casing 3 can be carried out at the same time, which allows to determine the location of possible corrosion more accurately, at high resolution and at high speed.

Although the present invention has been described in detail above by way of embodiments, the present invention should not be limited only to these particular embodiments, and various modifications may be made easily without departing from the scope of the present invention as defined by the claims. For example, the above embodiments have been described as to the case when applied to borehole casings, but the present invention may be equally applied for diagnosing various tubular elements, such as pipes and ducts, buried or exposed. In addition, use has been made of stationary type electrodes in the above-described embodiments, but use may also be made of roller type electrodes as is well known for one skilled in the art. It should also be noted that the number of electrodes to be arranged in the axial and circumferential directions can be determined depending on the conditions of applications as desired. In addition, the present invention may be so structured to transmit amplified data to ground surface in an analog form through the cable 4. In this instance, the A/D converter 59 may be discarded. Furthermore, the present invention may also be so structured that multiplexing takes place before amplification. In this case, only one ammplifier is required.

## Claims

1. Apparatus for diagnosing a long metal casing (3), comprising :
a housing which is connected to a cable (4) and which may be fitted into said casing;
a plurality of electrodes (A1, A2, A3, B1, B2, B3, C1, C2, C3, D1, D2, D3);
positioning means (12, 13, 14) provided in said housing for selectively positioning said plurality of electrodes at an advanced position where said plurality of electrodes are in contact with said casing;
measuring means (51-56, 57-60) provided inside of said housing and electrically connected to said plurality of electrodes for measuring at least the potential difference of said casing between the locations where said plurality of electrodes are in contact with said casing; and
control means (61) provided in said housing for controlling the operation of said measuring means;
characterized in that said measuring means comprises:
at least one d.c. amplifier circuit (51-54) having a stabilized offset voltage for amplifying the potential difference information of said casing and
an A/D converter (59) for converting the output signal of said amplifier circuit into digital data before being supplied to said cable.

2. The apparatus of claim 1 characterized in that said positioning means includes spring means (27) for normally biasing said electrodes to take said advanced positions and driving means (13, 14) for driving said electrodes to take retracted positions closer to said housing.

3. The apparatus of claim 1 characterized in that said amplifier circuit (51-54) includes a first operational amplifier (A1) having a pair of first input terminals, which are connectable to the input terminals of said amplifier circuit through a pair of first switches (SW1), respectively, and which are also connectable to a reference potential through a pair of second switches (SW2), respectively, a second input terminal and an output terminal, and that said amplifier circuit also includes a feedback loop ( SW3, C2, A2, C1, SW4, C_{H}, A3) connecting the ouptput terminal of said first operational amplifier (A1) to said second input terminal of said first operational amplifier thereby allowing to eliminate an offset voltage of said first operational amplifier.

4. The apparatus of claim 3, characterized in that said feedback loop includes a third switch (SW4) and holding means (C_{H}, A3) connected between said third switch (SW4) and said second input terminal of said first operational amplifier (A1) for temporarily holding an offset voltage at the output terminal of said first operational amplifier.

5. The apparatus of claim 4 characterized in that said holding means includes a first capacitor (C_{H}) connected between said feedback loop and a reference voltage.

6. The apparatus of claim 5 characterized in that said feedback loop further includes a fourth switch (SW3), a second capacitor (C2) and a second operational amplifier (A2) which are connected in series between said output terminal of said first operational amplifier and said third switch (SW4).

7. The apparatus of claim 6 characterized in that said feedback loop further includes a third operational amplifier (A3) connected between said first capacitor (C_{H}) and said second input terminal of said first operational amplifier (A1).

8. The apparatus of any one of claims 1 through 7 characterized in that said measuring means includes at least one current source (56) capable of applying a predetermined current between selected two of said plurality of electrodes.

9. The apparatus of any one of claims 1 through 8 characterized in that each of said plurality of electrodes (32) is enclosed by an electrically insulating material excepting a predetermined section (32a) which is brought into contact with said casing when said electrodes are moved to said advanced position.

10. The apparatus of claim 1 characterized in that said plurality of electrodes include at least a first set of electrodes (A1, A2, A3), which are located at a first axial location of said housing as spaced apart from each other circumferentially, and a second set of electrodes (B1, B2, B3), which are located at a second axial location of said housing, which is different from said first axial location, as spaced apart from each other circumferentially.

11. The apparatus of claim 10 characterized in that said first and second sets of electrodes are arranged at equal angular intervals.

## Patentansprüche

1. Vorrichtung für das Diagnostizieren einer langgestreckten metallischen Verrohrung (3), umfassend:
ein Gehäuse, das mit einem Kabel (4) verbunden ist, und das in die Verrohrung einführbar ist;
eine Mehrzahl von Elektroden (A1, A2, A3, B1, B2, B3, C1, C2, C3, D1, D2, D3);
Positioniermittel (12, 13, 14), die in dem Gehäuse vorgesehen sind für das selektive Positionieren der Mehrzahl von Elektroden an ausgefahrener Position, wo die Mehrzahl von Elektroden in Kontakt mit der Verrohrung ist;
Meßmittel (51-56, 57-60), die innerhalb des Gehäuses vorgesehen sind und elektrisch mit der Mehrzahl von Elektroden verbunden sind für das Messen zumindest der Potentialdifferenz der Verrohrung zwischen den Stellen, Wo die Mehrzahl von Elektroden in Kontakt mit der Verrohrung sind; und
Steuermittel (61), die in dem Gehäuse vorgesehen sind für das Steuern des Betriebes der Meßmittel,
dadurch gekennzeichnet, daß die Meßmittel umfassen:
zumindest einen Gleichstromverstärkerschaltkreis (51-54) mit einer stabilisierten Driftspannung für das Verstärken der Potentialdifferenz in Formation der Verrohrung, und
einen A/D Umsetzer (59) für das Umsetzen des Ausgangssignals des Verstärkerschaltkreises in Digitaldaten, bevor sie dem Kabel zugeführt werden.

2. Die Vorrichtung nach Anspruch 1, dadurch gekennzeichnet, daß die Positioniermittel Federmittel (27) umfassen für das im Normalfall erfolgende Vorspannen der Elektroden zum Einnehmen der ausgefahrenen Positionen, und Antriebsmitel (13, 14) für das Antreiben der Elektroden, um Positionen näher zu dem Gehäuse einzunehmen.

3. Die Vorrichtung nach Anspruch 1, dadurch gekennzeichnet, daß der Verstärkerschaltkreis (51-54) einen ersten Operationsverstärker (A1) mit einem Paar von ersten Eingangsklemmen umfaßt, die mit den Eingangsklemmen des Verstärkerschaltkreises über ein Paar erster Schalter (SW1) verbindbar sind, und die außerdem verbindbar sind mit einem Referenzpotential über ein Paar von zweiten Schaltern (SW2), eine zweite Eingangsklemme und eine Ausgangsklemme umfaßt, und daß der Verstärkerschaltkreis ferner eine Rückkopplungsschleife (SW3, C2, A2, C1, SW4, C_{H}, A3) umfaßt, welche die Ausgangsklemme des ersten Operationsverstärkers (A1) mit der zweiten Eingangsklemme des ersten Operationsverstärkers verbindet, wodurch eine Driftspannung des ersten Operationsverstärkers eliminierbar ist.

4. Die Vorrichtung nach Anspruch 3, dadurch gekennzeichnet, daß die Rückkopplungsschleife einen dritten Schalter (SW4) und Haltemittel (C_{H}, A3) umfaßt, angeschlossen zwischen dem dritten Schalter (SW4) und der zweiten Eingangsklemme des ersten Operationsverstärkers (A1) für das zeitweilige Halten einer Driftspannung an der Ausgangsklemme des ersten Operationsverstärkers.

5. Die Vorrichtung nach Anspruch 4, dadurch gekennzeichnet, daß das Haltemittel einen ersten Kondensator (C_{H}) umfaßt, angeschlossen zwischen der Rückkopplungsschleife und einer Referenzspannung.

6. Die Vorrichtung nach Anspruch 5, dadurch gekennzeichnet, daß die Rückkopplungsschleife ferner einen vierten Schalter (SW3), einen zweiten Kondensator (C2) und einen zweiten Operationsverstärker (A2) umfaßt, die in Serie zwischen die Ausgangsklemme des ersten Operationsverstärkers und den dritten Schalter (SW4) geschaltet sind.

7. Die. Vorrichtung nach Anspruch 6, dadurch gekennzeichnet, daß die Rückkopplungsschleife ferner einen dritten Operationsverstärker (A3) umfaßt, angeschlossen zwischen dem ersten Kondensator (C_{H}) und der zweiten Eingangsklemme des ersten Operationsverstärkers (A1).

8. Die Vorrichtung nach einem der Ansprüche 1 bis 7, dadurch gekennzeichnet, daß die Meßmittel mindestens eine Stromquelle (56) umfassen, die einen vorbestimmten Strom zwischen zwei ausgewählten der Mehrzahl der Elektroden einspeisen kann.

9. Die Vorrichtung nach einem der Ansprüche 1 bis 8, dadurch gekennzeichnet, daß jede der Mehrzahl von Elektroden (32) von einem elektrisch isolierenden Material umschlossen ist, mit Ausnahme eines vorbestimmten Abschnitts (32a), der in Kontakt gebracht wird mit der Verrohrung, wenn die Elektroden in die ausgefahrene Position bewegt werden.

10. Die Vorrichtung nach Anspruch 1, dadurch gekennzeichnet, daß die Mehrzahl von Elektroden mindestens einen ersten Satz von Elektroden (A1, A2, A3) umfaßt, die an einer ersten axialen Stelle des Gehäuses angeordnet sind im Abstand voneinander in Umfangsrichtung, sowie einen zweiten Satz von Elektroden (B1, B2, B3), die an einer zweiten axialen Stelle des Gehäuses positioniert sind, die abweicht von der ersten axialen Stelle, und voneinander in Umfangsrichtung beabstandet.

11. Die Vorrichtung nach Anspruch 10, dadurch gekennzeichnet, daß die ersten und zweiten Sätze von Elektroden in gleichen Winkelintervallen angeordnet sind.

## Revendications

1. Appareil pour diagnostiquer un long tube métallique (3), comprenant :
un boîtier qui est relié à un câble (4) et qui peut être fixé dans ledit tube ;
une pluralité d'électrodes (A1, A2, A3, B1, B2, B3, C1, C2, C3, D1, D2, D3) ;
des moyens de positionnement (12, 13, 14) prévus dans ledit boîtier pour positionner de manière sélective ladite pluralité d'électrodes en une position avancée où ladite pluralité d'électrodes est en contact avec ledit boîtier ;
des moyens de mesure (51-56, 57-60) prévus à l'intérieur dudit boîtier et reliés électriquement à ladite pluralité d'électrodes pour mesurer au moins la différence de potentiel dudit tube entre les emplacements où ladite pluralité d'électrodes est en contact avec ledit tube ; et
un moyen de contrôle (61) prévu dans ledit boîtier pour contrôler le fonctionnement desdits moyens de mesure ;
caractérisé en ce que lesdits moyens de mesure comprennent :
au moins un circuit amplificateur CC (51-54) ayant une tension offset stabilisée pour amplifier les informations de différence de potentiel dudit tube et
un convertisseur analogique-numérique (59) pour convertir le signal de sortie dudit amplificateur en données numériques avant d'être fourni audit câble.

2. L'appareil selon la revendication 1 caractérisé en ce que lesdits moyens de positionnement comprennent un moyen de ressort (27) pour polariser normalement lesdites électrodes pour prendre lesdites positions avancées et un moyen d'entraînement (13, 14) pour entraîner lesdites électrodes à prendre des positions en retrait plus proches dudit boîtier.

3. L'appareil selon la revendication 1 caractérisé en ce que ledit circuit amplificateur (51-54) comprend un premier amplificateur en fonctionnement (A1) muni d'une paire de premières bornes d'entrée, que l'on peut relier aux bornes d'entrée dudit circuit amplificateur par l'intermédiaire d'une paire de premiers commutateurs (SW1), respectivement, et que l'on peut également relier à un potentiel de référence par l'intermédiaire d'une paire de seconds commutateurs (SW2), respectivement, une seconde borne d'entrée et une borne de sortie, et en ce que ledit circuit amplificateur comprend également une boucle de rétroaction (SW3, C2, A2, C1, SW4, C_{H}, A3) reliant la borne de sortie dudit premier amplificateur en fonctionnement (A1) à la dite seconde borne d'entrée dudit premier amplificateur en fonctionnement ce qui permet d'éliminer une tension offset dudit premier amplificateur en fonctionnement.

4. L'appareil selon la revendication 3, caractérisé en ce que ladite boucle de rétroaction comprend un troisième commutateur (SW4) et un moyen de maintien (C_{H}, A3) relié entre ledit troisième commutateur (SW4) et ladite seconde borne d'entrée dudit premier amplificateur en fonctionnement (A1) pour maintenir temporairement une tension offset à la borne de sortie dudit premier amplificateur en fonctionnement.

5. L'appareil selon la revendication 4 caractérisé en ce que ledit moyen de maintien comprend un premier condensateur (C_{H}) relié entre ladite boucle de rétroaction et une tension de référence.

6. L'appareil selon la revendication 5 caractérisé en ce que ladite boucle de rétroaction comprend en outre un quatrième commutateur (SW3), un second condensateur (C2) et un second amplificateur en fonctionnement (A2) qui sont connectés en série entre ladite borne de sortie dudit premier amplificateur en fonctionnement et le dit troisième commutateur (SW4).

7. L'appareil selon la revendication 6 caractérisé en ce que ladite boucle de rétroaction comprend en outre un troisième amplificateur en fonctionnement (A3) relié entre ledit premier condensateur (C_{H}) et ladite seconde borne d'entrée dudit premier amplificateur en fonctionnement (A1).

8. L'appareil selon l'une quelconque des revendications 1 à 7 caractérisé en ce que lesdits moyens de mesure comprennent au moins une source de courant (56) capable d'appliquer un courant prédéterminé entre deux électrodes sélectionnées parmi ladite pluralité d'électrodes.

9. L'appareil selon l'une quelconque des revendications 1 à 8 caractérisé en ce que chaque électrode de ladite pluralité d'électrodes (32) est enveloppée d'un matériau isolant électriquement excepté une section prédéterminée (32a) qui est mise en contact avec ledit tube lorsque lesdites électrodes sont déplacées vers ladite position avancée.

10. L'appareil selon la revendication 1 caractérisé en ce que ladite pluralité d'électrodes comprend au moins une première série d'électrodes (A1, A2, A3), qui sont situées en un premier emplacement axial dudit boîtier séparées les unes des autres sur la circonférence, et une seconde série d'électrodes (B1, B2, B3), qui sont situées en un second emplacement axial dudit boîtier, qui est différent dudit premier emplacement axial, séparées les unes des autres sur la circonférence.

11. L'appareil selon la revendication 10 caractérisé en ce que lesdites première et seconde séries d'électrodes sont disposées à intervalles angulaires égaux.
